Europäisches Patentamt

European Patent Office

Office européen des brevets

(11) Numéro de publication : **0 401 059 B1**

(12) **FASCICULE DE BREVET EUROPEEN**

(45) Date de publication du fascicule du brevet :
**06.07.94 Bulletin 94/27**

(51) Int. Cl.⁵ : **A01N 59/20**

(21) Numéro de dépôt : **90400814.1**

(22) Date de dépôt : **23.03.90**

---

(54) **Composition phytosanitaire, son procédé de préparation et son utilisation, en particulier pour lutter contre le mildiou de la vigne.**

---

(30) Priorité : **29.05.89 FR 8907003**

(43) Date de publication de la demande :
**05.12.90 Bulletin 90/49**

(45) Mention de la délivrance du brevet :
**06.07.94 Bulletin 94/27**

(84) Etats contractants désignés :
**AT BE CH DE DK ES FR GB GR IT LI LU NL SE**

(56) Documents cités :
**WO-A-86/03939**
**CENTRAL PATENTS INDEX, BASIC ABS-**
**TRACTS JOURNAL, section C, semaine 83-38,**
**16 novembre 1983, Derwent Publishers Ltd,**
**Londres, GB**

(56) Documents cités :
**CHEMICAL PATENTS INDEX, BASIC ABS-**
**TRACTS JOURNAL, section C, semaine 88/20,**
**13 juillet 1988, Derwent Publications Ltd, Lon-**
**dres, GB**

(73) Titulaire : **Société ROQUETTE FRERES S.A.**
**F-62136 Lestrem (FR)**

(72) Inventeur : **Malras, Jean-Claude**
**158, rue de Biez**
**F-59193 Erquinghem Sur la Lys (FR)**
Inventeur : **Gosset, Serge**
**393, Chemin du Paradis**
**F-62136 Lestrem (FR)**

(74) Mandataire : **Koch, Gustave et al**
**Cabinet PLASSERAUD**
**84, rue d'Amsterdam**
**F-75009 Paris (FR)**

## Description

La présente invention concerne, en tant que produits industriels nouveaux, des compositions phytosanitaires à base de cuivre et de cyclodextrines, utiles notamment dans la protection des plantes contre les maladies cryptogamiques, ainsi que leur procédé de préparation.

Par maladies cryptogamiques, on entend toutes les affections susceptibles d'être provoquées par des cryptogames et notamment par des cryptogames dits "cellulaires" comme les champignons, algues, cyanophytes ou bactéries ou par des cryptogames dits "vasculaires" comme les fougères, équisétinées ou lycopodinées.

L'invention vise en particulier la préparation et l'utilisation de ces nouvelles compositions pour la protection des plantes cultivées contre les maladies dues à des champignons de l'ordre des Péronosporales.

Elle vise enfin tout particulièrement la préparation et l'utilisation desdites nouvelles compositions pour la protection de la vigne contre Plasmopara viticola, également appelé "mildiou de la vigne".

Il est connu que, parmi les agents phytopathogènes, les cryptogames et en particulier les champignons ou "fungi" sont capables d'atteindre puis d'infester tout ou partie de nombreuses plantes, à la suite de quoi, si les mesures de protection sanitaire sont insuffisantes, inadaptées ou trop tardives, lesdits champignons phytopathogènes sont susceptibles de provoquer de véritables épidémies empêchant toute utilisation ou valorisation, notamment alimentaire, de ces cultures.

Parmi les maladies fongiques capables de provoquer de graves épidémies aux plantes cultivées, mention doit être faite des maladies causées par les champignons de l'ordre des Péronosporales, notamment ceux communément appelés "mildious" et appartenant aux genres Plasmopara, Perenospora, Trachysphaera ou Bremia.

On peut citer en particulier le mildiou de la vigne (Plasmopara viticola), le mildiou de la pomme de terre ou de la tomate (Phytophtora infestans), le mildiou du tabac (Peronospora tabacina), le mildiou de la banane (Trachysphaera fructigena).

Les moyens mis en oeuvre pour protéger les plantes contre ce type de maladie cryptogamique peuvent être classés en deux grandes catégories, selon la nature de l'entité active mise en jeu:
- les compositions cupriques, c'est-à-dire contenant une source d'ions cuivre $Cu^{++}$, ceux-ci devant jouer le rôle de matière active, notamment fongicide et/ou bactéricide,
- les produits organiques de synthèse "acupriques" dont l'activité, notamment fongicide et/ou bactéricide, n'est pas liée spécifiquement à la présence d'une source d'ions cuivre $Cu^{++}$ mais à celle de molécules organiques dérivées par exemple de l'acide carbamique, de la phtalimide ou de la quinoléine.

Il convient de noter que ces molécules organiques actives peuvent être proposées sous forme de sels métalliques, y compris sous forme de sels de cuivre. Cependant, dans ce cas, la nature du métal présent n'est pas prépondérante en termes d'activité anticryptogamique. En effet, l'activité de l'entité molécule organique/métal reste fondamentalement liée à la nature de la molécule organique mise en jeu et le métal, notamment du fait de sa non ou de sa faible disponibilité sous forme ionique, n'y joue aucun rôle ou qu'un rôle négligeable.

Ainsi, la demande de brevet WO-A-86 03939 décrit des compositions fongicides comprenant de 1 à 90 % en poids de cyclodextrines et de 3 à 90 % en poids d'un principe actif fongicide, ce principe actif étant de nature organique et étant préférentiellement constitué de benomyl, de BCM, de métoméclan ou de phénarimol.

De même, la demande de brevet japonais n° 83-767 169/30 (JP-A-58 134 004) décrit des compositions fongicides contenant des complexes à base spécifiquement d'hydroxyquinoléate de cuivre et de cyclodextrine.

En ce qui concerne le rôle des ions cuivre $Cu^{++}$ comme matière active utilisable comme moyen de protection des plantes contre les maladies cryptogamiques, notamment celles causées par les champignons appartenant à l'ordre des Péronosporales, référence peut être faite au traitement, préventif et/ou curatif, du mildiou de la vigne (Plasmopara viticola), infection dont la biologie et l'épidémiologie ont été largement étudiées depuis 1878, date à laquelle ce champignon originaire d'Amérique a fait son apparition dans les vignobles européens.

Le cycle de développement de Plasmopara viticola, décrit par exemple dans le brevet FR 2.385.329, comprend les stades qui vont être rappelés ci-après.

Des oospores formées à l'automne "hibernent" jusqu'au printemps sur les feuilles mortes et autres matières organiques de la vigne tombées au sol. A cette époque, elles retrouvent des conditions favorables à leur développement, celui-ci se traduisant par la formation de macroconidies qui, entraînées par le vent ou d'autres agents vecteurs, arrivent sur diverses parties de la plante en phase de reprise végétative, le feuillage notamment.

Si les conditions, notamment climatiques (humidité, température) sont propices, le stade "zoospores" est atteint par lequel les macroconidies donnent naissance à de petites spores mobiles ou zoospores qui nagent grâce à leurs flagelles et vont se fixer près des stomates de la feuille. Elles germent à ce niveau en émettant

2

un filament qui pénètre et se développe sous forme de mycélium dans les tissus foliaires qui sont ainsi altérés.

Il en résulte des tâches régulières d'un vert olive ou jaune verdâtre à reflet brillant au niveau desquelles les tissus acquièrent une certaine transparence. C'est le stade "tâche d'huile", symptôme visible de l'infection.

Quelques jours après apparaît à la surface inférieure des feuilles une fine pellicule blanche constituée de "filaments conidiophores" portant de petites grappes de conidies. Créant une infection secondaire, celles-ci se dispersent sur les organes infectables de la vigne et, dans des conditions favorables de température et d'humidité, germent à leur tour en engendrant de nouvelles zoospores.

L'infection se propage ainsi jusqu'à l'automne, époque à laquelle se forment lesdites oospores qui hibernent jusqu'au printemps suivant.

Comme il a été dit, cette propagation se fait surtout au niveau des feuilles mais elle peut également atteindre de la même façon des organes malades, les jeunes pousses et les raisins. Le mildiou de la vigne, s'il n'est pas combattu en temps utile et avec des moyens adéquats, peut être gravement préjudiciable à la production de raisin. Les attaques foliaires intenses provoquent la dessication complète et la chute de feuillage; il s'ensuit un affaiblissement du cep; les raisins, mal nourris, ne grossissent plus, restent acides et donnent un vin de qualité inférieure. En outre, comme il a été dit, le mildiou peut atteindre et altérer directement les raisins et ce, à des stades de fructification très divers.

Le rôle des ions cuivre $Cu^{++}$ comme matière active utilisable comme moyen de protection des plantes contre les maladies causées par des champignons appartenant à l'ordre des Péronosporales, en particulier comme moyen de traitement préventif et/ou curatif du mildiou de la vigne, est connu depuis longtemps.

Il est connu par exemple que le sulfate de cuivre permet de lutter efficacement contre Plasmopara viticola mais que, du fait de son acidité et de sa richesse en cuivre soluble, il manifeste un certain degré de phytotoxicité et provoque, entre autres, une altération des tissus foliaires sous forme de brûlures.

Ce produit a été abandonné au profit d'une forme neutralisée, cette neutralisation pouvant se faire avantageusement avec de l'hydroxyde de calcium ou du carbonate de sodium.

Le mélange sulfate de cuivre/hydroxyde de calcium mis en oeuvre dans des compositions connues sous le nom de "bouillie médocaine" puis "bouillie bordelaise" ou "mélange de Bordeaux" a connu un très grand succès au cours de la première moitié de ce siècle du fait qu'il a permis globalement à l'industrie viticole de surmonter les problèmes apparus avec l'introduction des porte-greffes d'origine américaine responsables de la prolifération du mildiou de la vigne.

Une autre composition fréquemment utilisée, connue sous le nom de "bouillie bourguignonne" est constituée à partir d'un mélange sulfate de cuivre/carbonate de sodium.

D'autre part, d'autres sels de cuivre que le sulfate ont été utilisés avec succès dans ce type de préparation, en particulier l'oxychlorure de cuivre, l'hydroxyde de cuivre et l'oxyde cuivreux.

Ces préparations se présentent généralement sous forme de poudres mouillables destinées à être pulvérisées sur les plantes à protéger ou parties de celles-ci, les feuilles notamment.

On les utilise généralement à raison de 300 à 500g de cuivre métal $Cu^{++}$ à l'hectolitre de bouillie, soit 3 à 5 kg de cuivre métal $Cu^{++}$ à l'hectare sachant que le volume de bouillie mis en oeuvre pour traiter un hectare est classiquement de 1000 litres.

Ces spécialités cupriques agissent généralement comme agents phytosanitaires dits "de contact". C'est le cas d'ailleurs de certains produits organiques de synthèse "acupriques" tels que les dérivés de l'acide carbamique connus, par exemple, sous les appellations "zinèbe", "manèbe" ou "mancozèbe" ou les dérivés de la phtalimide connus, par exemple, sous les appellations "captafol" ou "folpet".

Ces agents phytosanitaires de contact se différencient des produits de synthèse dits "systémiques" tels que les alcoylphosphites pour lesquels la matière active est véhiculée par la sève, du point d'application (feuilles) vers les autres parties de la plante.

Il convient de rappeler que, dans la biologie et l'épidémiologie du mildiou de la vigne, le facteur déterminant et récurrent pour le développement de Plasmopara viticola est la présence d'une forte humidité (pluies et/ou rosées abondantes) permettant la formation, au moins pendant quelques heures. d'une pellicule ou de gouttelettes d'eau sur les parties vertes de la plante, les feuilles notamment et par-là même assurant la germination des conidies et la dissémination de l'infection sous forme de zoospores mobiles.

D'un autre côté, il est connu depuis longtemps que l'humidité ambiante et celle des feuilles traitées ont une importance prépondérante dans l'efficacité du traitement phytosanitaire appliqué, notamment dans le cas d'un traitement mettant en oeuvre une composition cuprique.

Ainsi, après pulvérisation, les gouttelettes d'une composition cuprique classique, de type "bouillie bordelaise" par exemple, laissent, en se désséchant sur la vigne, un dépôt formé par des composés cupriques insolubles. Il est généralement admis que, grâce à l'action de pluies et de rosées chargées de gaz carbonique, le dépôt insoluble forme petit à petit un composé cuprique soluble: l'hydroxyde de cuivre. Ce composé libère à son tour du cuivre soluble sous forme d'ions cuivre $Cu^{++}$. C'est sous cette forme que le cuivre diffuse dans les gouttes d'eau à la surface de la vigne et qu'il agit en tant que matière active intoxiquant les zoospores du mildiou.

Il a été démontré en plusieurs occasions qu'une très faible quantité de cuivre soluble libre, à peine de l'ordre de quelques ppm (parties par million), suffisait à assurer cette activité antifongique à l'encontre de Plasmopara viticola.

Le principal défaut des compositions phytosanitaires cupriques, c'est-à-dire faisant intervenir les ions cuivre $Cu^{++}$ en tant que matière active, réside dans la quantité de sels de cuvire à mettre en oeuvre pour obtenir une efficacité de traitement suffisante.

En effet, seule une partie minime de la source d'ions cuivre $Cu^{++}$ apportée joue véritablement le rôle d'agent fongicide, le reste étant lessivé par les pluies et ce, même dans le cas de la "bouillie bordelaise" pour laquelle l'apport de chaux a pour effet à la fois de neutraliser le sulfate de cuivre et de procurer à la bouillie une meilleure adhérence à la plante.

Outre le coût excessif dû au rendement insuffisant de ces spécialités cupriques, leur utilisation répétée est susceptible d'entraîner une accumulation de sels de cuivre dans le sol particulièrement néfaste à l'environnement et/ou d'exacerber leur phytotoxicité potentielle en provoquant des effets déprimants sur la croissance des plantes.

De nombreuses tentatives ont été faites afin d'améliorer la persistance dans le temps des ions cuivre $Cu^{++}$ en quantité et répartition suffisantes pour assurer une réaction efficace à l'encontre de l'apparition et/ou du développement du mildiou de la vigne.

Le brevet français 2.385.329 déjà cité préconise la fixation des ions cupriques sur une résine micronisée capable d'échanger lesdits ions cupriques avec les cations présents dans l'humidité recouvrant les organes découverts de la plante. Il est annoncé que de tels échangeurs sont capables d'améliorer significativement la persistance dans le temps de l'activité antifongique des ions $Cu^{++}$ et ce, notamment lorsqu'ils sont associés à une argile bentonitique également micronisée, capable de gonfler et de former un gel au contact de l'eau.

La préparation des compositions anticryptogamiques revendiquées apparaît cependant complexe et délicate. La bentonite utilisée doit notamment posséder certaines caractéristiques bien spécifiques devant permettre, entre autres, d'éviter des réactions internes tendant à former des sels insolubles avec les ions cuivre et de conférer au gel cuprobentonitique une réaction faiblement acide, le pH optimum se situant à 6,5 environ. On peut également s'interroger sur l'innocuité des résines échangeuses d'ions préconisées (copolymères sulfonés du styrène et du divinylbenzène en particulier) en termes de protection de l'environnement.

Dans son souci d'améliorer l'efficacité anticryptogamique des sources d'ions cuivre $Cu^{++}$ dont il disposait, l'homme de l'art s'est également tourné vers des formulations associant composés cupriques d'une part et produits de synthèse acupriques d'autre part. Dans cette optique, ces derniers peuvent être des agents de contact tels que les dérivés précités de l'acide carbamique ou de la phtalimide et/ou des agents systémiques du type alcoylphosphites.

De telles formulations associant un agent anti-mildiou à action de contact, qu'il soit de nature cuprique ou non, et un agent anti-mildiou d'action systémique de type alcoylphosphite sont décrites dans les brevets FR 2.377.155 et FR 2.555.411. L'action complémentaire dans le temps de ces deux types d'agents s'avère particulièrement bénéfique dans la lutte contre Plasmopara viticola.

Cependant, le principal inconvénient rencontré dans l'utilisation de produits de synthèse réside dans leur toxicité vis-à-vis de l'environnement.

Les effets de ces produits sur le milieu naturel sont difficiles à évaluer et obligent les fabricants de compositions phytosanitaires à mener des études à caractère toxicologique ou écologique longues et coûteuses.

Il découle de ce qui précède qu'il existait un besoin réel de mettre à la disposition du public une compositon phytosanitaire utilisant les propriétés des ions cuivre $Cu^{++}$, pouvant être mise en oeuvre à un niveau quantitatif nettement plus faible que les formulations cupriques traditionnelles et ne présentant aucun effet secondaire à caractère toxicologique ou écologique.

L'invention a donc pour but de remédier aux inconvénients de l'art antérieur et de fournir une composition phytosanitaire cuprique répondant mieux que celles qui existent déjà aux diverses exigences de la pratique.

Et la Société Demanderesse a eu le mérite de trouver que ce but était atteint dès lors que les compositions phytosanitaires du genre en question comportent au moins une cyclodextrine apte à former des complexes avec les ions cuivre $Cu^{++}$.

La Société Demanderesse a notamment constaté que, de façon surprenante et inattendue, les compositions phytosanitaires selon l'invention présentaient entre autres comme avantage d'être efficaces à des doses calculées en équivalent cuivre nettement plus faibles que celles nécessitées lors de l'utilisation de produits cupriques traditionnels.

Sans vouloir être lié par une quelconque théorie, il semble que la grande efficacité des compositions selon l'invention soit due au fait que non seulement les complexes aptes à être formés entre cyclodextrine(s) et ions cuivre Cu$^{++}$ contenus dans et/ou libérés de la source de cuivre sont capables de se dissocier sous l'action des pluies et de l'humidité ambiante et donc de rendre disponibles lesdits ions Cu$^{++}$ actifs, mais encore que cette dissociation se fait de façon progressive évitant toute libération superflue ou tout lessivage de cette matière active. On peut remarquer à ce propos que la demande de brevet japonais n° 88-137 240/20 (JP-A-63 079 802) a déjà décrit l'utilisation de cyclodextrine dans des produits phytosanitaires, mais dans un but, différent, d'augmenter la solubilité des molécules actives telles que des fongicides, des insecticides et des herbicides, l'ion cuivre Cu$^{++}$ en tant que principe actif n'étant par ailleurs jamais cité.

En conséquence, la composition phytosanitaire conforme à l'invention, utile notamment dans la protection des plantes contre les maladies cryptogamiques, est caractérisée par le fait qu'elle contient une source d'ions Cu$^{++}$ et au moins une cyclodextrine apte à former des complexes avec lesdits ions cuivre.

Par source d'ions Cu$^{++}$, on entend toute composition contenant et/ou capable de libérer, directement ou non, lesdits ions.

Ladite source d'ions cuivre comprend au moins un sel inorganique de cuivre, notamment choisi dans le groupe comprenant le sulfate de cuivre, l'hydroxyde de cuivre, l'oxychlorure de cuivre et l'oxyde cuivreux.

De façon encore plus préférentielle, ladite source d'ions cuivre est constituée principalement de sulfate de cuivre et/ou d'hydroxyde de cuivre.

En tant que sources de cuivre pouvant avantageusement être mises en oeuvre dans le cadre de l'invention, on peut citer les compositions de type "bouillie bordelaise" ou "bouillie bourguignonne" précédemment évoquées et utiles, par exemple, pour la protection de la vigne contre Plasmopara viticola.

Par le terme "cyclodextrine", on entend tout macrocycle construit à partir de six, sept ou huit motifs glucose et désigné respectivement par alpha, beta ou gamma cyclodextrine, ainsi que tout dérivé de l'un quelconque de ceux-ci. Le terme "dérivé" doit être compris comme comprenant tout macrocycle tel qu'il vient d'être défini pour lequel l'un au moins de ses motifs glucose constitutifs est substitué, au moins en un endroit, par un groupement ou une molécule qui peuvent être de taille et de fonctionnalité très diverses, comme par exemple un groupement alcoylé et notamment hydroxyalcoylé tel qu'un groupement hydroxypropyle ou une molécule de mono- ou di-saccharide telle qu'une molécule de maltose, glucose, fructose ou saccharose.

De préférence, on met en oeuvre, dans le cadre de l'invention, au moins une cyclodextrine choisie dans le groupe comprenant la β-cyclodextrine et les dérivés éthérifiés de celle-ci, notamment les dérivés hydroxyalcoylés.

La mise en oeuvre de β-cyclodextrine (ci-après désignée par BCD) et/ou de β-cyclodextrine hydroxypropylée (ci-après désignée par HPBCD) apparaît comme particulièrement avantageuse.

La non-toxicité et la biodégradabilité des cyclodextrines font que les compositions phytosanitaires selon l'invention sont parfaitement tolérées par le milieu naturel.

Généralement, on utilisera au sein desdites compositions un rapport pondéral entre cyclodextrine(s) et ions cuivre Cu$^{++}$ compris entre 0,1/1 et 10/1, de préférence compris entre 0,2/1 et 5/1 et encore plus préférentiellement compris entre 0,25/1 et 2,5/1.

Ces compositions pourront se présenter sous des formes solides ou liquides très diverses et, par exemple, sous forme de poudres mouillables, de suspensions concentrées, de bouillies, d'aérosols, de poudres pour poudrage ou dispersion, de solutions, de concentrés solubles dans l'eau, de concentrés émulsionnables, d'émulsions, etc.

On pourra faire appel, en particulier, à des formes liquides et notamment à des bouillies, dispersions, solutions, emulsions, contenant de 50 à 500 g, de préférence de 100 à 300 g d'ions cuivre par hectolitre de composition. Lesdites formes liquides pourront par exemple être appliquées par pulvérisation, en particulier par pulvérisation sur les feuilles et/ou fruits des plantes à traiter.

En ce qui concerne la présentation des compositions phytosanitaires selon l'invention, par exemple sous forme de poudres mouillables ou poudres à pulvériser, la présence caractéristique de cyclodextrine(s) au sein de ces compositions, n'empêche aucunement que celles-ci puissent être adjuvantées à l'aide des produits habituellement utilisés dans cette application tels que notamment les agents mouillants et dispersants ainsi que, si besoin, d'agents stabilisants et/ou d'autres additifs comme des agents de pénétration, des adhésifs ou des agents anti-mottants, des colorants, etc.

La Société Demanderesse a également pu constater que non seulement la présence de cyclodextrine(s) n'empêchait aucunement ces adjuvants de jouer le rôle qu'il leur est alloué, mais qu'en outre les compositions selon l'invention présentaient généralement un pouvoir adhésif et couvrant amélioré par rapport à celui des compositions cupriques traditionnelles, par exemple de type bouillie bordelaise, ce pouvoir venant, dans une certaine mesure, encore renforcer et prolonger l'activité anticryptogamique, notamment fongicide, des ions cuivre Cu$^{++}$.

D'autre part, la présence de cyclodextrine(s) au sein des compositions phytosanitaires selon l'invention n'empêche aucunement que celles-ci puissent conjointement contenir une ou plusieurs autres matières actives, notamment fongicides, et en particulier un ou plusieurs produits organiques de synthèse "acupriques" tels que les agents de contact ou les agents systémiques évoqués précédemment.

En ce qui concerne la méthode de préparation des compositions selon l'invention, celle-ci reste simple et ne nécessite aucunement de disposer d'appareillages et autres moyens techniques de mise en oeuvre coûteuse et/ou délicate. On s'attachera cependant à ce que cette préparation soit effectuée dans des conditions assurant au mieux l'obtention d'un mélange intime entre cyclodextrine(s) et source d'ions cuivre et conférant par-là même audit mélange une bonne aptitude à la formation de complexes entre cyclodextrines et ions cuivre $Cu^{++}$.

Comme on l'a vu précédemment, la remarquable efficacité des compositions selon l'invention peut être expliquée par le fait que lesdits complexes sont progressivement dissociés sous l'action des pluies et de l'humidité ambiante, la Société Demanderesse ayant en outre trouvé que le principal paramètre influant sur cette dissociation était le pH rencontré dans le milieu naturel, celui-ci se révélant sensiblement différent de la gamme de pH optimale requise pour assurer la formation desdits complexes.

En conséquence, la préparation des compositions phytosanitaires selon l'invention sera préférentiellement effectuée dans une gamme de pH assurant, même pour des temps de mélange de courte durée, une bonne complexation entre cyclodextrine(s) et ions cuivre $Cu^{++}$.

A ce titre, la Société Demanderesse a mis en évidence, par des dosages complexométriques qui seront présentés ultérieurement, le fait que la propension des cyclodextrines à former des complexes avec le cuivre était optimale dans les milieux alcalins, des milieux dont le pH se situe entre 10 et 13 environ et notamment de l'ordre de 11 à 12 environ, se révélant particulièrement propices à l'utilisation de β-cyclodextrine (BCD) ou de dérivés de celle-ci, par exemple de type hydroxypropylé (HPBCD).

En tout état de cause, l'ajustement du pH du milieu, s'il est requis, peut se faire à l'aide de tout agent alcalin usuel et notamment à l'aide de soude, de potasse, de carbonate de soude ou de chaux.

Les compositions selon l'invention peuvent avantageusement être préparées par malaxage de la ou des cyclodextrine(s) et de la source d'ions cuivre en présence d'eau et de l'agent alcalin éventuellement requis. La quantité d'eau contenue au sein de ces compositions ne constitue pas un paramètre particulièrement important dans le cadre de la présente invention. On veillera cependant à ce que la quantité d'eau introduite soit suffisamment importante pour éviter l'utilisation de moyens mécaniques puissants qui s'imposerait du fait des hauts niveaux de viscosité atteints. D'un autre côté, on évitera un excès d'eau qui entraînerait des coûts excessifs de séparation et de séchage.

En pratique, la quantité d'eau introduite dans le malaxeur représente de 30 à 60% en poids du mélange source d'ions cuivre $Cu^{++}$ / cyclodextrine(s) mis en oeuvre.

On veillera également, au cours de l'opération de malaxage, à limiter l'échauffement de la préparation de façon à éviter la formation d'oxyde noir. A cet effet, on préférera, en pratique, maintenir la température au-dessous de 50°C.

Le temps de malaxage doit être suffisant pour assurer l'obtention d'un milieu homogène et, en particulier, pour assurer un temps de contact entre source de cuivre et cyclodextrine(s) suffisant pour favoriser la complexation des ions cuivre $Cu^{++}$. Dans la pratique, une durée de malaxage de l'ordre de 1 h. à 2 h. permet d'atteindre ce but. Cette durée sera bien entendu influencée par l'efficacité du système mélangeur.

Après malaxage, les compositions obtenues peuvent être séchées puis broyées et ce, par tous moyens conventionnels, de façon à pouvoir être utilisées sous forme de poudres mouillables.

Comme il a été précisé, ces compositions peuvent être adjuvantées à l'aide des produits habituellement utilisés dans cette application et en particulier d'agents mouillants, ioniques ou non ioniques, qui assurent l'homogénéité du produit lors de sa mise en oeuvre et en améliorent encore la répartition sur les plantes lors de la pulvérisation.

A titre indicatif, des agents mouillants tels que les esters du diéthylèneglycol, les alcoylphénols oxyéthylénés et dérivés, les condensats d'oxyde d'éthylène et de terpène, les polymères d'oxyde d'éthylène, les alcools terpéniques, les amines grasses, etc. peuvent être valablement utilisés au sein des compositions phytosanitaires selon l'invention, notamment celles se présentant sous forme de poudres mouillables.

En tout état de cause, quelle que soit la forme de présentation et/ou d'adjuvantation des compositions phytosanitaires selon l'invention, on dispose de nouveaux produits industriels présentant des avantages indéniables par rapport aux compositions phytosanitaires traditionnelles utilisant les ions cuivre $Cu^{++}$ en tant que matière active. Les compositions selon l'invention permettent à la fois de sous-doser en cuivre et/ou d'espacer les traitements phytosanitaires curatifs et/ou préventifs et ce, sans que l'efficacité desdits traitements n'en soit atteinte. La phytotoxicité des sources de cuivre se trouve réduite, les inconvénients liés à l'utilisation de doses massives de cuivre sont ainsi diminués.

D'un autre côté, les cyclodextrines sont issues de matières végétales renouvelables, à savoir de matières amylacées, et leur biodégradabilité et leur non-toxicité en font des produits parfaitement tolérés par l'environnement.

Ainsi, les compositions selon l'invention, dont l'utilisation apparaît très sûre du point de vue écologique, présentent des avantages considérables de par leur efficacité nettement améliorée par rapport aux compositions cupriques de l'art antérieur et de par leur absence d'effets secondaires nuisibles pour l'environnement, en particulier en comparaison des produits phytosanitaires de synthèse.

Si l'utilisation desdites compositions s'impose tout particulièrement pour la protection de la vigne contre Plasmopara viticola, il est clair que celles-ci peuvent, de manière générale, être avantageusement mises en oeuvre pour lutter, dans le cadre de traitements préventifs et/ou curatifs, contre de nombreux cryptogames phytopathogènes, notamment d'origine bactérienne ou fongique et en particulier contre les champignons appartenant à l'ordre des Péronosporales.

En fait, les compositions selon l'invention trouveront leur utilité dans tout traitement phytosanitaire justifiant de la mise en oeuvre, en tant que matière active, d'ions cuivre $Cu^{++}$ et ce, indépendamment de l'agent phytopathogène incriminé, de la plante à traiter (vigne mais également cultures fruitières telles que les pommiers, poiriers, fraisiers, cultures légumières telles que laitues, tomates, pois, choux, cultures céréalières, etc.) et des éléments devant être traités, qu'il s'agisse notamment de plantes et/ou de parties de plantes, y compris les semences, susceptibles d'être contaminées ou déjà contaminées, mais aussi, par exemple, d'éléments, et notamment des sols et substrats de croissance, des enceintes et matériels de culture, récolte, stockage et transport, déjà en contact ou destinés à être mis en contact avec ces plantes ou parties de plantes.

L'invention pourra être encore mieux comprise à l'aide des exemples qui suivent et qui font état de certains modes de réalisation particulièrement avantageux des compositions selon l'invention.

## EXEMPLE 1

Dans cet exemple, on étudie le pouvoir complexant de la β-cyclodextrine vis-à-vis du cuivre selon le protocole décrit ci-après. On prépare dans de l'eau distillée une solution à 4 g/l de β-cyclodextrine, la β-cyclodextrine utilisée étant celle commercialisée par la Société Demanderesse sous la marque KLEPTOSE[R]. Dans 50 ml de la solution ainsi obtenue, on ajoute 2 ml d'une solution à 2% de ferrocyanure de potassium ($K_4$ Fe $(CN)_6$, $3H_2O$). Le pH du milieu est ajusté à la valeur désirée à l'aide d'hydroxyde de sodium ou d'acide chlorhydrique.

On dose dans cette préparation une solution 0,1 M de sulfate de cuivre jusqu'à apparition d'un précipité brun persistant, en veillant à maintenir le pH à la valeur souhaitée à l'aide d'hydroxyde de sodium.

Les résultats exprimés en mg de cuivre complexé par g de β-cyclodextrine (BCD) sont repris dans le tableau I ci-dessous.

## TABLEAU I

| pH | Cuivre complexé en mg par g de BCD |
|----|-----------------------------------|
| 5  | 95   |
| 7  | 102  |
| 9  | 102  |
| 10 | 235  |
| 11 | 1245 |
| 12 | 940  |
| 13 | 210  |

Il ressort du tableau I que le pouvoir complexant de la β-cyclodextrine vis-à-vis du cuivre se manifeste préférentiellement dans la zone de pH comprise entre 10 et 13 environ et notamment entre pH 11 et 12 environ.

## EXEMPLE 2

Dans cet exemple, on répète le protocole tel que décrit au niveau de l'exemple 1, mis à part le fait que l'on remplace la β-cyclodextrine (BCD) par un dérivé hydroxypropylé de celle-ci, également fabriqué par la Société Demanderesse. Dans le cas présent, l'hydroxypropyl β-cyclodextrine mise en oeuvre présente un degré de substitution (DS) de 0,5 environ, la notion de DS devant être rattachée au nombre moyen de groupements substituants, dans le cas présent de groupements hydroxypropyle, portés par motif glucose constitutif du macrocycle.

Les résultats exprimés en mg de cuivre complexé par g d'hydroxypropyl β-cyclodextrine (HPBCD) sont repris au niveau du tableau II ci-dessous.

## TABLEAU II

| pH | Cuivre complexé en mg par g de HPBCD |
|---|---|
| 5 | 45 |
| 7 | 45 |
| 9 | 51 |
| 10 | 70 |
| 11 | 245 |
| 12 | 200 |
| 13 | 25 |

Les résultats du tableau II montrent que le pouvoir complexant de l'HPBCD vis-à-vis du cuivre, s'il est globalement inférieur à celui du produit non substitué (BCD), est également optimum pour la gamme de pH se situant entre 10 et 13 environ et notamment entre pH 11 et 12 environ.

EXEMPLE 3

On prépare une poudre mouillable à partir d'une composition de type "bouillie bordelaise", c'est-à-dire dont la source d'ions cuivre $Cu^{++}$ est constituée de sulfate de cuivre, lequel est mis en présence de chaux. Conformément à l'invention, on met en oeuvre, au sein de la composition, une cyclodextrine apte à former des complexes avec les ions cuivre $Cu^{++}$, en l'occurrence la β-cyclodextrine (BCD) commercialisée par la Société Demanderesse sous la marque KLEPTOSE[R].

On introduit dans un malaxeur les produits suivants dans l'ordre indiqué:

Eau potable          1 900 g
BCD KLEPTOSE[R]      300 g
Soude caustique      21 g
Sulfate de cuivre    1 200 g
Chaux                400 g.

La suspension est malaxée durant deux heures. On contrôle la température à l'aide d'un système de refroidissement afin de la maintenir au-dessous de 50°C.

En fin d'opération, le pH de la composition est égal à 11,2, c'est-à-dire dans le domaine de pH où le degré de complexation du cuivre par la β-cyclodextrine s'est avéré le plus élevé conformément au tableau I ci-avant.

La préparation est ensuite séchée puis broyée à une granulométrie inférieure à 70 μm.

EXEMPLE 4

Dans cet exemple, on prépare la même composition qu'à l'exemple 3 sauf que l'on ne met pas en oeuvre de soude. Après 2 heures de malaxage, le pH de la préparation est égal à 9,9. La composition est ensuite séchée puis broyée de la même façon que pour l'exemple 3.

EXEMPLE 5

Dans cet exemple, on respecte le protocole de préparation décrit pour l'exemple 3, mis à part que le taux de β-cyclodextrine (BCD) par rapport au cuivre est augmenté:

| | |
|---|---|
| Eau potable | 2 040 g |
| BCD KLEPTOSE^R | 450 g |
| Soude caustique | 20 g |
| Sulfate de cuivre | 1 200 g |
| Chaux | 400 g. |

Après malaxage, le pH de la composition est égal à 11,1. La préparation est ensuite séchée puis broyée de façon à être présentée sous forme de poudre mouillable.

## EXEMPLE 6

La préparation ici décrite est identique à celle de l'exemple 5, si ce n'est que l'on supprime l'introduction de soude caustique. Le pH de la préparation après malaxage est égal à 10,2.

## EXEMPLE 7

Dans cet exemple, on respecte le même protocole de préparation que celui utilisé pour les exemples 3 et 5 en augmentant cependant le taux de β-cyclodextrine (BCD) par rapport au cuivre:

| | |
|---|---|
| Eau potable | 2 200 g |
| BCD KLEPTOSE^R | 600 g |
| Soude caustique | 22 g |
| Sulfate de cuivre | 1 200 g |
| Chaux | 400 g. |

Après 2 heures de malaxage, le pH de la composition est égal à 11,0. La préparation est ensuite séchée et broyée à l'état de poudre mouillable.

## EXEMPLE 8

Dans cet exemple, on remplace l'association sulfate de cuivre / chaux par une source de cuivre constituée uniquement d'hydroxyde de cuivre (Cu (OH)$_2$).

On introduit dans un malaxeur les produits suivants dans l'ordre indiqué:

| | |
|---|---|
| Eau potable | 1 060 g |
| BCD KLEPTOSE^R | 600 g |
| Hydroxyde de cuivre | 460 g |
| Soude caustique | 1,1 g |

La suspension est malaxée durant 2 heures pendant lesquelles on maintient la température au-dessous de 50°C à l'aide d'un système de refroidissement.

A la fin du malaxage, le pH de la composition est égal à 11,1.

La composition est séchée et broyée à une granulométrie inférieure à 70 μm pour être présentée sous forme de poudre mouillable.

## EXEMPLE 9

Des groupes de 8 parcelles de 4 jeunes plants de vigne (variété Cabernet-Sauvignon) sont traités à partir du 22 juillet, les traitements étant ensuite espacés de 14 jours, avec des bouillies obtenues à partir de l'une ou l'autre des compositions suivantes:

Composition A =
   composition selon l'invention décrite à l'exemple 3;
Composition B =
   composition selon l'invention décrite à l'exemple 4;
Composition C =
   composition selon l'invention décrite à l'exemple 5;
Composition D =
   composition selon l'invention décrite à l'exemple 6;
Composition E =
   composition selon l'invention décrite à l'exemple 7;
Composition F =
   composition selon l'invention décrite à l'exemple 8.

9

Les bouillies préparées à l'aide de ces compositions sont adjuvantées d'un agent mouillant commercialisé par DU PONT DE NEMOURS sous l'appellation "spreader sticker" à raison de 80 ml par hectolitre.

Ces traitements sont effectués à raison de 1000 l/ha.

Le 2 août, on effectue une contamination artificielle des plants de vigne avec une souche de <u>Plasmopara viticola</u>.

Les 17 et 26 août, un jury expert effectue le contrôle des jeunes plants traités par appréciation visuelle et globale par rapport à des plants témoins non traités. La notation tient compte de l'état général de la plante, le facteur essentiel étant le pourcentage de feuillage atteint par le mildiou.

A titre de témoins, on traite également et ce, suivant les doses d'utilisation préconisées par leur fabricant, 2 groupes de 8 parcelles l'un avec une composition cuprique classique commercialisée par R.S.R. sous l'appellation "bouillie bordelaise R.S.R.", l'autre avec un fongicide de synthèse commercialisé par ROHM & HAAS, sous l'appellation "Dithane M 45" à base du dérivé de l'acide carbamique connu sous le nom de "mancozèbe".

Les résultats obtenus sont consignés dans les tableaux III et IV ci-après. Les concentrations des compositions sont exprimées en teneur en cuivre métal pour les composés cupriques et en matière active ("mancozèbe" ou éthylène bis (dithiocarbamate) double de zinc et de manganèse) pour le fongicide de synthèse.

## TABLEAU III

| Composition | Dose de matière active (cuivre métal ou autre) en g/hl | Rapport pondéral BCD/cuivre | % feuillage atteint Le 17.8 | Le 26.8 |
|---|---|---|---|---|
| Témoin non traité | - | - | 67,8 | 89,4 |
| Bouillie bordelaise Témoin | 300 | - | 5,6 | 28,8 |
| Fongicide de synthèse Témoin | 280 | - | 9,1 | 35,6 |
| Composition A | 300 | 1 | 4,8 | 23,4 |
| Composition E | 300 | 2 | 6,4 | 28,8 |
| Composition F | 300 | 2 | 4,5 | 13,1 |

Les dégâts occasionnés sur le témoin non traité montrent que l'attaque du mildiou a été particulièrement importante lors de cet essai.

Les résultats obtenus par mise en oeuvre de compositions selon l'invention, c'est-à-dire à base de cuivre et de cyclodextrine(s), montrent que la présence de cyclodextrine(s) au sein de ces compositions permet globalement d'en améliorer l'efficacité en termes d'activité fongicide.

A ce titre, la combinaison hydroxyde de cuivre / β-cyclodextrine (composition F) apparaît ici comme particulièrement efficace.

Dans le cas présent, à savoir des compositions dosées à 300 g/hl de cuivre métal, la combinaison sulfate de cuivre/β-cyclodextrine (composition A) apparaît particulièrement avantageuse pour un rapport pondéral BCD/cuivre de l'ordre de 1/1.

EP 0 401 059 B1

## TABLEAU IV

| Composition | Dose de matière active (cuivre métal ou autre) en g/hl | Rapport pondéral BCD/cuivre | % feuillage atteint | |
|---|---|---|---|---|
| | | | Le 17.8 | Le 26.8 |
| Bouillie bordelaise Témoin | 300 | - | 5,6 | 28,8 |
| Composition A | 150 | 1 | 8,6 | 25,9 |
| Composition B | 150 | 1 | 9,1 | 25,9 |
| Composition F | 150 | 2 | 11,7 | 29,1 |
| Composition C | 100 | 1,5 | 7,5 | 30,0 |
| Composition D | 100 | 1,5 | 9,8 | 34,4 |
| Fongicide de synthèse Témoin | 280 | - | 9,1 | 35,6 |

Les résultats du tableau IV montrent globalement que les compositions selon l'invention permettent une réduction notable de la quantité de cuivre pulvérisée sur les plants de vigne tout en assurant une protection efficace contre le développement de Plasmopara viticola.

Les compositions selon l'invention titrant à 150 g/hl de cuivre métal se révèlent aussi efficaces, voire plus efficaces qu'une bouillie bordelaise classique, c'est-à-dire exempte de cyclodextrine(s), qui contient pourtant deux fois plus de cuivre métal.

Les compositions selon l'invention testées à 100 g/hl de cuivre métal sont à peine moins efficaces que la bouillie bordelaise classique. Ces produits restent supérieurs au fongicide de synthèse témoin et présentent l'avantage, comme celles titrant à 150 g/hl de cuivre métal d'ailleurs, de ne révéler aucun signe de phytotoxicité à l'encontre de la vigne et notamment aucune trace de brûlures.

EXEMPLE 10

Des groupes de 6 parcelles élémentaires de 4 ceps fructifères (cépage Muscadelle) sont traités à partir du 6 juin, les traitements étant espacés de 14 jours, et ce jusqu'au 16 août, avec des bouillies obtenues à partir des susdites compositions A, C et F.

Ces traitements sont effectués à raison de 1000 l/ha. On effectue deux contaminations artificielles avec une souche de Plasmopara viticola, l'une le 14 juin sur les feuilles et l'autre le 26 juin sur les grappes.

Les 20 juillet et 9 août, un jury expert effectue le contrôle des ceps de vigne traités et non traités par appréciation visuelle de l'état général de la production de raisin suite à l'attaque du mildiou.

La notation tient compte du pourcentage de grappes atteintes, même partiellement, par le mildiou.

D'autre part, lors de l'observation du 9 août, ledit jury évalue le pourcentage pondéral de raisin ayant subi des dégâts significatifs, cette évaluation étant en fait le paramètre essentiel pris en compte par l'exploitant.

A titre de témoin, on traite également 2 groupes de 6 parcelles, l'un avec la composition cuprique dénommée "bouillie bordelaise R.S.R", l'autre avec le fongicide de synthèse "Dithane M 45".

Les résultats obtenus sont consignés dans le tableau V ci-après. Les compositions sont exprimées en teneur en cuivre métal pour les composés cupriques et en matière active ("mancozèbe") pour le fongicide de synthèse.

11

TABLEAU V

| Composition | Dose de matière active (g/hl) | Rapport pondéral BCD/Cu | % attaque sur grappes le 20.07 | le 09.08 | % dégâts le 09.08 |
|---|---|---|---|---|---|
| Témoin non traité | - | - | 54,8 | 99 | 54,8 |
| Bouillie bordelaise Témoin | 300 | - | 16,8 | 75,9 | 16,8 |
| Fongicide de synthèse (témoin) | 280 | - | 11,9 | 57 | 11,9 |
| Composition A | 150 | 1 | 9,5 | 62,3 | 9,5 |
| Composition C | 100 | 1,5 | 15,4 | 71,7 | 15,4 |
| Composition F | 150 | 2 | 10,7 | 61,3 | 10,7 |

Les résultats du tableau V montrent que les compositions selon l'invention permettent une réduction notable de la quantité de cuivre pulvérisée sur les ceps de vigne en production tout en assurant une protection efficace contre le développement du mildiou.

Les compositions titrant 150 g/hl de cuivre se révèlent aussi efficaces, voire plus efficaces, que la bouillie bordelaise classique qui est utilisée à 300 g/hl de cuivre, soit le double en matière active.

La composition selon l'invention testée à 100 g/hl de cuivre métal est aussi efficace que la bouillie bordelaise classique.

Des observations similaires ont pu être faites en ce qui concerne l'attaque du feuillage et ce jusqu'à la chute des feuilles.

Les compositions selon l'invention présentent l'avantage de ne montrer aucun signe de phytotoxicité et en particulier aucune trace de brûlure.

EXEMPLE 11

A titre de comparaison, on a traité selon le même protocole que précédemment, des parcelles de plants de vigne à l'aide de compositions préparées par mise en oeuvre dans l'eau, juste avant utilisation, d'une part d'un produit cuprique classique ("bouillie bordelaise R.S.R") sous forme de poudre et, d'autre part, de β-cyclodextrine (BCD) KLEPTOSE[R] sous forme de poudre.

Les résultats obtenus sont consignés dans le tableau VI ci-après:

EP 0 401 059 B1

## TABLEAU VI

| Dose de bouillie bordelaise en g/hl | Dose de cuivre en g/hl | Dose de BCD KLEPTOSE en g/hl | Rapport pondéral BCD/cuivre | % feuillage atteint Le 17.8 | Le 26.8 |
|---|---|---|---|---|---|
| 1500 | 300 | 0 (témoin) | - | 5,6 | 28,8 |
| 1500 | 300 | 75 | 0,25 | 6,4 | 23,1 |
| 1500 | 300 | 150 | 0,50 | 6,6 | 21,3 |
| 1500 | 300 | 300 | 1 | 9,2 | 20,3 |
| 1500 | 300 | 600 | 2 | 10,5 | 19,1 |
| 1000 | 200 | 150 | 0,75 | 6,3 | 19,7 |

Il ressort des résultats du tableau VI que la source d'ions cuivre Cu$^{++}$ mise en oeuvre dans les compositions phytosanitaires selon l'invention peut avantageusement être constituée d'une composition cuprique déjà existante sur le marché et notamment de type "bouillie bordelaise".

En outre, la présence caractéristique de cyclodextrine(s) au sein des compositions selon l'invention, et notamment de β-cyclodextrine (BCD) permet d'augmenter significativement l'efficacité des sources d'ions cuivre Cu$^{++}$ mises en oeuvre et ce, même pour des rapports pondéraux BCD/cuivre de l'ordre de 0,25.

Cette efficacité surprenante peut être mise à profit par la préparation de compositions anticryptogamiques dont la teneur en cuivre et donc la toxicité potentielle vis-à-vis des plantes et de l'environnement, est significativement réduite par rapport aux produits cupriques traditionnels.

**Revendications**

1. Composition anticryptogamique pour la protection des plantes, caractérisée en ce qu'elle contient une source d'ions cuivre Cu$^{++}$ constituée par un ou plusieurs sel(s) de cuivre inorganique(s) et au moins une cyclodextrine apte à former des complexes avec lesdits ions cuivre.

2. Composition selon la revendication 1, caractérisée en ce que la source d'ions cuivre Cu$^{++}$ est constituée par au moins un sel de cuivre inorganique choisi dans le groupe comprenant le sulfate de cuivre, l'hydroxyde de cuivre, l'oxychlorure de cuivre et l'oxyde cuivreux.

3. Composition selon la revendication 2, caractérisée en ce que la source d'ions cuivre Cu$^{++}$ est constituée principalement de sulfate de cuivre et/ou d'hydroxyde de cuivre.

4. Composition selon la revendication 2, caractérisée en ce que la source de cuivre est du type bouillie bordelaise ou bouillie bourguignonne.

5. Composition selon l'une quelconque des revendications 1 à 4, caractérisée en ce que la cyclodextrine est la β-cyclodextrine ou un dérivé de celle-ci.

6. Composition selon la revendication 5, caractérisée en ce que le dérivé de β-cyclodextrine est un dérivé alcoylé, de préférence hydroxyalcoylé et notamment hydroxypropylé ou un dérivé substitué au moins en un endroit par une molécule de mono- ou di-saccharide et notamment par une molécule de maltose, glucose, fructose ou saccharose.

7. Composition selon l'une quelconque des revendications 1 à 6, caractérisée en ce que le rapport pondéral cyclodextrine(s)/ions cuivre est choisi entre 0,1/1 et 10/1, de préférence entre 0,2/1 et 5/1 et encore plus préférentiellement entre 0,25/1 et 2,5/1.

13

8. Composition selon l'une quelconque des revendications 1 à 7, caractérisée en ce qu'elle se présente sous forme de poudre mouillable ou poudre à pulvériser, de suspension concentrée, de bouillie, de poudre pour poudrage ou dispersion, de solution, de concentré soluble dans l'eau, de concentré émulsionnable, d'émulsion ou d'aérosol.

9. Composition selon l'une quelconque des revendications 1 à 8, caractérisée en ce qu'elle se présente sous une forme liquide, en particulier sous forme de bouillie, solution, dispersion ou émulsion, contenant de 50 à 500 g, de préférence de 100 à 300 g d'ions cuivre par hectolitre de composition.

10. Procédé de préparation d'une composition anticryptogamique pour la protection des plantes, caractérisé en ce qu'il comprend une étape au cours de laquelle on mélange, en présence ou non d'autres constituants, une source d'ions cuivre $Cu^{++}$ constituée par un ou plusieurs sel(s) de cuivre inorganique(s) avec au moins une cyclodextrine, le rapport pondéral cyclodextrine(s)/ions cuivre mis en oeuvre étant de préférence compris entre 0,1/1 et 10/1.

11. Procédé de préparation d'une composition anticryptogamique selon la revendication 10, caractérisé en ce que, durant ladite étape de mélange entre cyclodextrine(s) et source d'ions cuivre, l'on amène puis l'on maintient le pH entre 10 et 13 environ et l'on maintient la température inférieure à 50°C environ.

12. Procédé de préparation d'une composition anticryptogamique selon la revendication 11, caractérisé en ce que :
    - la source d'ions cuivre mise en oeuvre est constituée principalement de sulfate de cuivre et/ou d'hydroxyde de cuivre,
    - la cyclodextrine mise en oeuvre est la β-cyclodextrine,
    - le rapport pondéral β-cyclodextrine/ions cuivre mis en oeuvre est compris entre 0,2/1 et 5/1, de préférence entre 0,25/1 et 2,5/1.

13. Procédé de préparation d'une bouillie anticryptogamique selon la revendication 10, caractérisé en ce que :
    - la source d'ions cuivre est du type bouillie bordelaise ou bouillie bourguignonne,
    - la cyclodextrine mise en oeuvre est la β-cyclodextrine,
    - le rapport pondéral β-cyclodextrine/ions cuivre mis en oeuvre est compris entre 0,2/1 et 5/1, de préférence entre 0,25/1 et 2,5/1.

14. Procédé de traitement anticryptogamique, caractérisé en ce que l'on applique, à des fins curatives et/ou préventives, une composition selon l'une quelconque des revendications 1 à 9 à des plantes et/ou parties de plantes et/ou à des éléments, et notamment des sols, des substrats de croissance, des enceintes et matériels de culture, récolte, stockage et transport, déjà en contact ou destinés à être mis en contact avec ces plantes ou parties de plantes.

15. Procédé de traitement selon la revendication 14, caractérisé en ce que lesdites plantes et/ou parties de plantes et/ou lesdits éléments sont contaminés ou contaminables par l'un au moins des champignons appartenant à l'ordre des Péronosporales.

16. Procédé de protection de la vigne contre <u>Plasmopara viticola</u> ou mildiou de la vigne, caractérisé en ce qu'on applique, en particulier par pulvérisation sur le feuillage et/ou les fruits des plantes, une composition anticryptogamique selon l'une quelconque des revendications 1 à 9.

17. Procédé de protection de la vigne contre <u>Plasmopara viticola</u> ou mildiou de la vigne, caractérisé en ce qu'on applique, en particulier par pulvérisation sur le feuillage et/ou les fruits des plantes, une composition anticryptogamique selon la revendication 9.


**Patentansprüche**

1. Anticryptogames Präparat zum Schutz von Pflanzen, **dadurch gekennzeichnet,** daß es eine Quelle für Kupferionen $Cu^{++}$, bestehend aus einem oder mehreren anorganischen Kupfersalz(en), und mindestens ein Cyclodextrin mit der Eignung zur Komplexbildung mit den Kupferionen enthält.

EP 0 401 059 B1

2. Präparat nach Anspruch 1, **dadurch gekennzeichnet,** daß die Quelle für Kupferionen Cu$^{++}$ mindestens aus einem anorganischen Kupfersalz, ausgewählt aus der Gruppe Kupfersulfat, Kupferhydroxid, Kupferoxychlorid und Kupferoxid, besteht.

3. Präparat nach Anspruch 2, **dadurch gekennzeichnet,** daß die Quelle für Kupferionen Cu$^{++}$ hauptsächlich aus Kupfersulfat und/oder Kupferhydroxid besteht.

4. Präparat nach Anspruch 2, **dadurch gekennzeichnet,** daß die Kupferquelle vom Typ Bordelaiser Brühe oder Burgunderbrühe ist.

5. Präparat nach einem der Ansprüche 1 bis 4, **dadurch gekennzeichnet,** daß das Cyclodextrin β-Cyclodextrin oder ein Derivat davon ist.

6. Präparat nach Anspruch 5, **dadurch gekennzeichnet,** daß das β-Cyclodextrinderivat ein Alkylderivat, bevorzugt ein Hydroxyalkylderivat und insbesondere ein Hydroxypropylderivat oder ein Derivat, das an mindestens einer Stelle durch ein Mono- oder Disaccharidmolekül und insbesondere durch ein Maltose-, Glucose-, Fructose- oder Saccharosemolekül substituiert ist, ist.

7. Präparat nach einem der Ansprüche 1 bis 6, **dadurch gekennzeichnet,** daß das Gewichtsverhältnis Cyclodextrin(e)/Kupferionen zwischen 0,1/1 und 10/1, bevorzugt zwischen 0,2/1 und 5/1 und noch bevorzugter zwischen 0,25/1 und 2,5/1 ausgewählt ist.

8. Präparat nach einem der Ansprüche 1 bis 7, **dadurch gekennzeichnet,** daß es in Form eines benetzbaren Pulvers oder eines Pulvers zum Zerstäuben, einer konzentrierten Suspension, einer Brühe, eines Pulvers zum Bestäuben oder Dispersion, einer Lösung, eines wasserlöslichen Konzentrats, eines emulgierbaren Konzentrats, einer Emulsion oder eines Aerosols vorliegt.

9. Präparat nach einem der Ansprüche 1 bis 8, **dadurch gekennzeichnet,** daß es in einer flüssiger Form, insbesondere in Form einer Brühe, Lösung, Dispersion oder Emulsion, die 50 bis 500 g, bevorzugt 100 bis 300 g Kupferionen pro Hektoliter Präparat enthält, vorliegt.

10. Verfahren zur Herstellung eines anticryptogamen Präparats zum Schutz von Pflanzen, **dadurch gekennzeichnet,** daß man während einer Stufe in Gegenwart oder Abwesenheit anderer Bestandteile eine Quelle für Kupferionen Cu$^{++}$, bestehend aus einem oder mehreren anorganischen Kupfersalz(en), mit mindestens einem Cyclodextrin vermischt, wobei das verwendete Gewichtsverhältnis Cyclodextrin(e)/Kupferionen bevorzugt zwischen 0,1/1 und 10/1 liegt.

11. Verfahren zur Herstellung eines anticryptogamen Präparats nach Anspruch 10, **dadurch gekennzeichnet,** daß man während der Stufe des Vermischens des/der Cyclodextrins/Cyclodextrine mit der Quelle für die Kupferionen den pH-Wert auf einen Wert zwischen etwa 10 und 13 bringt und dann dort hält und die Temperatur unter etwa 50°C hält.

12. Verfahren zur Herstellung eines anticryptogamen Präparats nach Anspruch 11, **dadurch gekennzeichnet,** daß
    - die verwendete Quelle für Kupferionen hauptsächlich aus Kupfersulfat und/oder Kupferhydroxid besteht,
    - das verwendete Cyclodextrin β-Cyclodextrin ist,
    - das verwendete Gewichtsverhältnis β-Cyclodextrin/Kupferionen zwischen 0,2/1 und 5/1 und bevorzugt zwischen 0,25/1 und 2,5/1 liegt.

13. Verfahren zur Herstellung einer anticryptogamen Brühe nach Anspruch 10, **dadurch gekennzeichnet,** daß
    - die Quelle für Kupferionen vom Typ Bordelaiser Brühe oder Burgunderbrühe ist,
    - das verwendete Cyclodextrin β-Cyclodextrin ist,
    - das verwendete Gewichtsverhältnis β-Cyclodextrin/Kupferionen zwischen 0,2/1 und 5/1 und bevorzugt zwischen 0,25/1 und 2,5/1 liegt.

14. Verfahren zur anticryptogamen Behandlung, **dadurch gekennzeichnet,** daß man zu kurativen und/oder präventiven Zwecken ein Präparat nach einem der Ansprüche 1 bis 9 auf die Pflanzen und/oder Pflanzenteile und/oder Elemente, insbesondere die Böden, die Wachstumssubstrate, die Umzäunungen und

15

die Materialien zur Kultur, Ernte, Lagerung und Transport, die mit den Pflanzen oder Pflanzenteilen bereits in Kontakt sind oder damit in Kontakt kommen werden, aufbringt.

15. Verfahren zur Behandlung nach Anspruch 14, **dadurch gekennzeichnet,** daß die Pflanzen und/oder Pflanzenteile und/oder Elemente mit mindestens einem Pilz der Ordnung Peronosporales kontaminiert oder kontaminierbar sind.

16. Verfahren zum Schutz der Weinreben vor <u>Plasmopara viticola</u> oder Rebenmehltau, **dadurch gekennzeichnet,** daß man auf das Blattwerk und/oder die Früchte der Pflanzen ein anticryptogames Präparat nach einem der Ansprüche 1 bis 9, insbesondere durch Zerstäuben, aufbringt.

17. Verfahren zum Schutz der Weinreben vor <u>Plasmopara viticola</u> oder Rebenmehltau, **dadurch gekennzeichnet,** daß man auf das Blattwerk und/oder die Früchte der Pflanzen ein anticryptogames Präparat nach Anspruch 9, insbesondere durch Zerstäuben, aufbringt.

## Claims

1. Anticryptogamic composition, useful particularly for the protection of plants, characterized in that it contains a source of $Cu^{++}$ copper ions constituted by one or several inorganic copper salt(s) and at least one cyclodextrin adapted to form complexes with said copper ions.

2. Composition according to claim 1, characterized in that the source of $Cu^{++}$ copper ions is constituted by at least one inorganic copper salt selected from the group comprising copper sulphate, copper hydroxide, copper oxychloride and cuprous oxide.

3. Composition according to claim 2, characterized in that the source of $Cu^{++}$ copper ions is essentially constituted by copper sulphate and/or copper hydroxide.

4. Composition according to claim 2, characterized in that the copper source is of the Bordeaux mixture or Burgundian mixture type.

5. Composition according to any one of claims 1 to 4, characterized in that the cyclodextrin is β-cyclodextrin or a derivative of the latter.

6. Composition according to claim 5, characterized in that the derivative of β-cyclodextrin is an alkylated derivative, preferably hydroxyalkylated and particularly hydroxypropylated or a derivative substituted at least at one place by a molecule of mono- or disaccharide and particularly by a molecule of maltose, glucose, fructose or saccharose.

7. Composition according to any one of claims 1 to 6, characterized in that the ratio by weight cyclodextrin(s)/copper ions is selected between 0.1/1 and 10/1, preferably between 0.2/1 and 5/1 and still more preferably between 0.25/1 and 2.5/1.

8. Composition according to any one of claims 1 to 7, characterized in that it is presented in a form of a wettable powder or spray powder, of concentrated suspension, of mixture, of powder for dusting or dispersion, of solution, of watersoluble concentrate, of emulsifiable concentrate, of emulsion or of aerosol.

9. Composition according to any one of claims 1 to 8, characterized in that it is presented in a liquid form, in particular in the form of a slurry, solution, dispersion or emulsion, containing from 50 to 500 g, preferably from 100 to 300 g of copper ions per hectoliter of composition.

10. Process for the preparation of an anticryptogamic composition, useful particularly for the protection of plants, characterized in that it comprises a step in the course of which there is mixed, in presence or not of other constituents, a source of $Cu^{++}$ copper ions constituted by one or several inorganic copper salt(s) with at least one cyclodextrin, the ratio by weight cyclodextrin(s)/copper ions employed being preferably comprised between 0.1/1 and 10/1.

11. Process for the preparation of an anticryptogamic composition according to claim 10, characterized in that, during said mixing step between cyclodextrin(s) and source of copper ions, the pH is brought and then kept between about 10 and 13 and the temperature maintained less than about 50°C.

12. Process for the preparation of an anticryptogamic composition according to claim 11, characterized in that,
    - the source of copper ions employed is essentially constituted by copper sulphate and/or copper hydroxide,
    - the cyclodextrin employed is β-cyclodextrin,
    - the ratio by weight β-cyclodextrin/copper ions employed is comprised between 0.2/1 and 5/1, preferably between 0.25/1 and 2.5/1.

13. Process for the preparation of an anticryptogamic mixture according to claim 10, characterized in that,
    - the source of copper ions is of the Bordeaux mixture or Burgundian mixture type,
    - the β-cyclodextrin employed is β-cyclodextrin,
    - the ratio by weight β-cyclodextrin/copper ions employed is comprised between 0.2/1 and 5/1, preferably between 0.25/1 and 2.5/1.

14. Method of anticryptogamic treatment, characterized in that there is applied, for curative and/or preventive purposes, a composition according to any one of claims 1 to 9 to plants and/or portions of plants and/or elements, and particularly soils, growth substrates, containers and culture, harvesting, storage and transport equipment, already in contact or intended to be placed in contact with these plants or portions of plants.

15. Method of treatment according to claim 14, characterized in that said plants and/or parts of plants and/or elements are contaminated or contaminable by one at least of the fungi belonging to the Peronosporales order.

16. Method of protecting the vine against Plasmopara viticola or mildew of the vine, characterized in that there is applied, in particular by spraying on the foliage and/or the fruits of the plants, an anticryptogamic composition according to any one of claims 1 to 9.

17. Method of protecting the vine against Plasmopara viticola or mildew of the vine, characterized in that there is applied, in particular by spraying on the foliage and/or the fruits of the plants, an anticryptogamic composition according to claim 9.